(19) Europäisches Patentamt
European Patent Office
Office européen des brevets

(11) EP 2 566 005 A1

(12) EUROPÄISCHE PATENTANMELDUNG

(43) Veröffentlichungstag:
06.03.2013 Patentblatt 2013/10

(51) Int Cl.:
*H02J 5/00* (2006.01)

(21) Anmeldenummer: 11180060.3

(22) Anmeldetag: 05.09.2011

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(71) Anmelder: RRC power solutions GmbH
66424 Homburg/Saar (DE)

(72) Erfinder:
• Huwig, Dominik
66839 Schmelz (DE)
• Wambsganss, Peter
66450 Bexbach (DE)

(74) Vertreter: Hofstetter, Schurack & Partner
Patent- und Rechtsanwälte
Balanstrasse 57
81541 München (DE)

(54) **Schaltungsanordnung und Verfahren zur induktiven Energieübertragung**

(57) Die vorliegende Erfindung betrifft eine Schaltungsanordnung zur induktiven Energieübertragung mit einem Leistungssender (10) und einem Leistungsempfänger (12). Leistungsempfängerseitig ist eine Vorrichtung (18) zur Impedanzmodulation vorgesehen. Zur Demodulation einer leistungsempfängerseitig vorgenommenen Impedanzmodulation wird insbesondere die über dem leistungssenderseitigen Kondensator ($C_{PS}$) abfallende Spannung ausgewertet. Die Erfindung betrifft überdies ein entsprechendes Verfahren zur induktiven Energieübertragung.

Fig.2

EP 2 566 005 A1

**Beschreibung**

Die vorliegende Erfindung betrifft eine Schaltungsanordnung zur induktiven Energieübertragung mit einem Leistungssender und einem Leistungsempfänger, wobei der Leistungssender umfasst: einen Eingang mit einem ersten und einem zweiten Eingangsanschluss, eine Brückenschaltung mit mindestens einem ersten und einem zweiten elektronischen Schalter, die seriell zwischen den ersten und den zweiten Eingangsanschluss gekoppelt sind, wobei zwischen dem ersten und dem zweiten elektronischen Schalter ein erster Brückenmittelpunkt gebildet ist, eine Ansteuervorrichtung zum Ansteuern des ersten und des zweiten elektronischen Schalters mit jeweils einem Ansteuersignal, wobei jedes Ansteuersignal eine Schaltfrequenz aufweist, einen leistungssenderseitigen Resonanzkreis, der mindestens einen leistungssenderseitigen Kondensator und mindestens eine weitere leistungssenderseitige Impedanz umfasst, die zueinander in Serie geschaltet sind, wobei der Resonanzkreis zwischen den ersten Brückenmittelpunkt und einen der beiden Eingangsanschlüsse gekoppelt ist, und eine Auswertevorrichtung zur Bestimmung und Auswertung eines leistungssenderseitigen Resonanzstroms durch den leistungssenderseitigen Resonanzkreis, wobei der Leistungsempfänger umfasst: mindestens eine leistungsempfängerseitige Spule, die mit der mindestens einen leistungssenderseitigen Impedanz induktiv gekoppelt ist, eine Vorrichtung zur Impedanzmodulation, die mit der leistungsempfängerseitigen Spule gekoppelt ist, und einen Ausgang mit einem ersten und einem zweiten Ausgangsanschluss zum Bereitstellen einer Leistung an einen Verbraucher. Sie betrifft überdies ein entsprechendes Verfahren zur induktiven Energieübertragung unter Verwendung einer Schaltungsanordnung mit einem Leistungssender und einem Leistungsempfänger.

In Systemen zur induktiven Energieübertragung ist neben dieser oft auch eine Datenübertragung zur Regelung und zur Gewährleistung der Sicherheit implementiert. Dies geschieht in vielen Fällen durch eine leistungsempfängerseitige Impedanzmodulation. Als Beispiel kann hier ein Qi-kompatibles System genannt werden (Wireless Power Consortium). Diese Impedanzmodulation führt zu einer senderseitigen Modulation des Resonanzstroms $i_{AC}$. Dieser muss zur Demodulation der übertragenen Information gemessen werden.

Um das Induzieren von Energie in benachbarte, insbesondere metallische Gegenstände zu vermeiden, wird häufig zusätzlich eine empfänger- sowie eine senderseitige Wirkleistungsmessung durchgeführt. Das Verhältnis dieser, welches dem Wirkungsgrad entspricht, gibt Aufschluss über eine eventuell induzierte Leistung in systemfremde Gegenstände. Diese Wirkleistungsmessung basiert in den meisten Fällen auf einer Messung des leistungssenderseitig eingespeisten Gleichstroms $I_{DC}$.

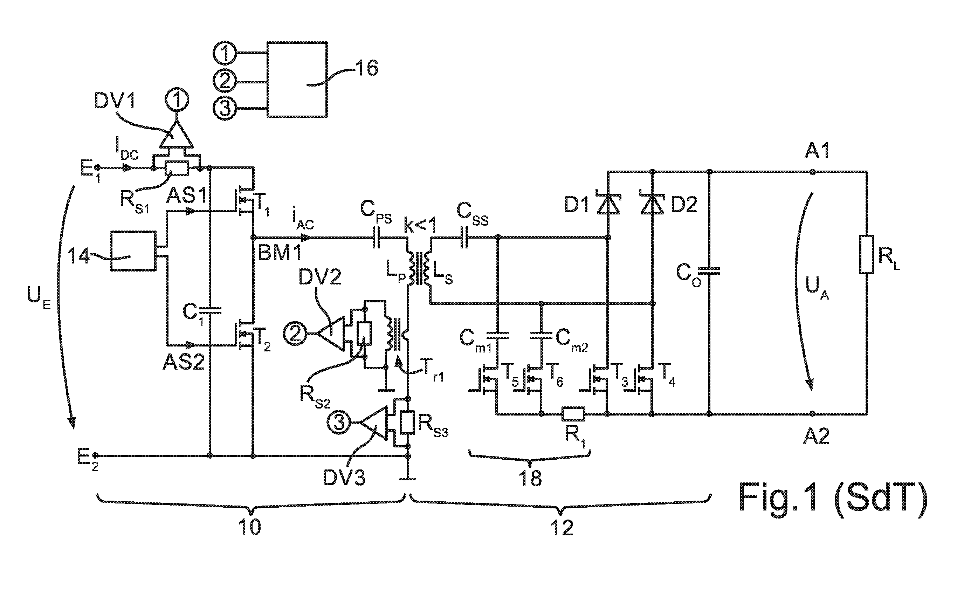

Fig. 1 zeigt in diesem Zusammenhang eine gattungsgemäße, aus dem Stand der Technik bekannte Schaltungsanordnung. Der Leistungssender ist dabei mit 10 bezeichnet, der Leistungsempfänger mit 12. Der Leistungssender 10 weist einen Eingang mit einem ersten E1 und einem zweiten Eingangsanschluss E2 auf. Zwischen den Eingangsanschlüssen E1, E2 liegt eine Eingangsspannung $U_E$ an. Vorliegend ist als Schaltregler eine Halbbrückenschaltung vorgesehen, die einen ersten $T_1$ und einen zweiten elektronischen Schalter $T_2$ umfasst. Der über den Eingang E1 in die Schaltungsanordnung fließende Gleichstrom ist mit $I_{DC}$ bezeichnet. Die Schalter $T_1$, $T_2$ sind seriell zwischen den ersten E1 und den zweiten Eingangsanschluss E2 gekoppelt. Zwischen den beiden elektronischen Schaltern $T_1$, $T_2$ ist ein erster Brückenmittelpunkt BM1 gebildet. Zwischen die Eingangsanschlüsse E1, E2 ist weiterhin ein Kondensator C1 gekoppelt, der dazu dient, die Brückenschaltung mit einer möglichst stabilen Gleichspannung zu versorgen. Eine Ansteuervorrichtung 14 dient dazu, den ersten $T_1$ und den zweiten elektronischen Schalter $T_2$ mit jeweils einem Ansteuersignal AS1, AS2 anzusteuern. Jedes Ansteuersignal AS1, AS2 weist eine Schaltfrequenz $f_S$ auf. Die Schaltfrequenz $f_S$ beträgt insbesondere zwischen 110 kHz und 500 kHz.

Ein leistungssenderseitiger Resonanzkreis umfasst vorliegend einen leistungssenderseitigen Kondensator $C_{PS}$ sowie eine leistungssenderseitige Spule $L_P$. Diese sind zueinander in Serie geschaltet und zwar zwischen den ersten Brückenmittelpunkt BM1 und vorliegend den zweiten Eingangsanschluss E2, der das Bezugspotential des Leistungssenders darstellt. Der durch den leistungssenderseitigen Resonanzkreis $C_{PS}$, $L_P$ fließende leistungssenderseitige Resonanzstrom ist mit $i_{AC}$ bezeichnet. Eine mit 16 bezeichnete Auswertevorrichtung dient zur Bestimmung und Auswertung zumindest des leistungssenderseitigen Resonanzstroms $i_{AC}$.

Der mit 12 bezeichnete Leistungsempfänger umfasst eine leistungsempfängerseitige Spule $L_S$, die mit der mindestens einen leistungssenderseitigen Impedanz induktiv gekoppelt ist, sowie eine Vorrichtung 18 zur Impedanzmodulation, die ebenfalls mit der leistungsempfängerseitigen Spule $L_S$ gekoppelt ist. Seriell zur leistungsempfängerseitigen Spule ist ein leistungssenderseitiger Kondensator $C_{SS}$ angeordnet. Zwischen zwei Ausgangsklemmen A1, A2 ist ein Kondensator $C_0$ gekoppelt. Dieser sorgt dafür, dass eine weitgehend konstante Ausgangsspannung $U_A$ an einen Verbraucher $R_L$ bereitgestellt wird.

Die Auswertevorrichtung 16 misst den speisenden Gleichstrom $I_{DC}$ mittels eines Messwiderstands $R_{S1}$ und einem Differenzverstärker DV1. Der Resonanzstrom $i_{AC}$ wird mit einem Messtransformator Tr1, einem Messwiderstand $R_{S2}$ sowie einem Differenzverstärker DV2 ermittelt. Eine alternative Messung des Resonanzstroms $i_{AC}$ nutzt einen Messwiderstand $R_{S3}$ sowie einen Differenzverstärker DV3.

Dadurch, dass bei den bekannten Vorgehensweisen Messwiderstände $R_{S1}$, $R_{S2}$ beziehungsweise $R_{S3}$ verwendet werden, werden einerseits Wirkverluste generiert und andererseits die Güte des leistungssenderseitigen Resonanzkreises $C_{PS}$, $L_P$ verringert. Bei der mit 2 bezeichneten Alternative ist zwar der benötigte Messwiderstand $R_{S2}$ nicht seriell zum Resonanzkreis angeordnet, allerdings wird ein Strommesstransformator Tr1 eingesetzt. Dieser verursacht zusätzliche Kosten und benötigt ein großes Bauvolumen. Gleichzeitig verringert dieser Strommesstransformator den effektiven Kopplungsfaktor k zwischen Leistungssender 10 und Leistungsempfänger 12 geringfügig.

Eine gattungsgemäße Schaltungsanordnung ist auch bekannt aus Texas Instruments: bqTESLA Wireless Power Transmitter Manager EVM, User's Guide SLVU467-June 2011 sowie Texas Instruments: Qi Compliant Wireless Power Transmitter Manger, SLUSAL8-June 2011. Bei der zuletzt genannten Druckschrift ergibt sich die Kapazität des leistungssenderseitigen Resonanzkreises durch die Parallelschaltung der Kondensatoren C15 und C13. Mit der Parallelschaltung der Kondensatoren C15 und C13 ist ein Kondensator C18 gekoppelt. Seriell zum Kondensator C18 ist ein Spannungsteiler angeordnet, der die Widerstände R6 und R30 umfasst. Die über dem Widerstand R30 abfallende Spannung steht an Ausgangsklemmen COMM+ beziehungsweise COMM- zur weiteren Bearbeitung bereit. Der Kondensator C18 dient der AC-Auskopplung im Betrieb über der Parallelschaltung der Kondensatoren C13 und C15 abfallenden Spannung.

Die Aufgabe der vorliegenden Erfindung besteht darin, eine von der Vorrichtung zur Impedanzmodulation leistungssenderseitig bewirkte Modulation bei möglichst geringen Verlusten und einer möglicht geringen Beeinträchtigung der Güte des leistungssenderseitigen Resonanzkreises zu demodulieren.

Diese Aufgabe wird gelöst durch eine Schaltungsanordnung mit den Merkmalen von Patentanspruch 1 sowie durch ein Verfahren mit den Merkmalen von Patentanspruch 15.

Der vorliegenden Erfindung liegt die Erkenntnis zugrunde, dass bei intelligenter Ausnutzung aller auf der Leistungssenderseite verfügbaren Information auf störende Messwiderstände oder Strommesstransformatoren verzichtet werden kann. Zur Ermittlung des Resonanzstroms $i_{AC}$ ist nämlich lediglich beispielsweise eine Messung der Spannung am leistungssenderseitigen Kondensator $C_{PS}$ nötig. Insofern genügt es, die Auswertevorrichtung mit dem mindestens einen leistungssenderseitigen Kondensator zu koppeln. Dieser ist bereits vorhanden. Deshalb ist kein zusätzlicher Aufwand nötig. Demnach werden keine Messwiderstände oder Strommesstransformatoren benötigt und damit auch kein zusätzlicher Bauraum. Da die über dem leistungssenderseitigen Kondensator abfallende Spannung einen hohen Amplitudenwert hat, ist im Gegensatz zu einer Messung mit einem Messwiderstand üblicherweise kein zusätzlicher Verstärker nötig. Insbesondere ergeben sich keine zusätzlichen Verluste, was in einer hohen Güte des leistungssenderseitigen Resonanzkreises sowie in einem hohen Wirkungsgrad resultiert. Gegenüber der bekannten Methode, die einen Strommesstransformator verwendet, ist vorliegend keine zusätzliche Induktivität auf der Leistungssenderseite seriell zum Serienresonanzkreis anzuordnen. Damit ergibt sich ein maximaler effektiver Kopplungsfaktor zwischen der leistungssenderseitigen Impedanz und der leistungsempfängerseitigen Spule.

Die Spannung $U_{Cps}$ am Resonanzkondensator $C_{PS}$ kann nach der kirchhoffschen Maschengleichung auch aus der Eingangsspannung $U_E$ und der Spannung an der Induktivität $L_P$ errechnet werden. Hierzu ist eine Messung der Spannung über der Induktivität $L_P$ nötig. Diese Vorgehensweise ist besonders dann bevorzugt, wenn statt dem Resonanzkondensator $C_{PS}$ die Induktivität $L_P$ mit dem Bezugspotential verbunden ist.

Besonders bevorzugt ist die Auswertevorrichtung ausgelegt, eine Spannung, die mit der über dem mindestens einen leistungssenderseitigen Kondensator zumindest in vorgebbaren Zeiträumen abfallenden Spannung korreliert ist, zu bestimmen und auszuwerten. Insbesondere, wenn einer der beiden Anschlüsse des Kondensators mit einem Bezugspotential verbunden ist, lässt sich die über dem Kondensator abfallende Spannung besonders einfach erfassen und auswerten.

Zwischen die Auswertevorrichtung und den mindestens einen leistungssenderseitigen Kondensator kann ein Verstärker, insbesondere ein Differenzverstärker, gekoppelt sein. Bei einem geeigneten Niveau der über dem leistungssenderseitigen Kondensator im Betrieb abfallenden Spannung kann jedoch auch darauf verzichtet werden. Bei schwachen Signalen erhöht sich dadurch jedoch die Resistenz gegen Störungen.

Besonders bevorzugt hat die Auswertevorrichtung Kenntnis, insbesondere durch Auswertung eines der Ansteuersignale und/oder durch Auslesen aus einer Speichervorrichtung, über die Schaltfrequenz des ersten und des zweiten Ansteuersignals. Weiterhin bevorzugt hat die Auswertevorrichtung Kenntnis, insbesondere durch Auslesen aus einer Speichervorrichtung, über die Kapazität des mindestens einen leistungssenderseitigen Kondensators.

Auf der Basis dieser bekannten Werte ist die Auswertevorrichtung dann ausgelegt, den leistungssenderseitigen Resonanzstrom $\hat{I}_{AC} = \omega_{SW} \cdot C_{PS} \cdot C_{PS} \cdot \hat{U}_{Cps}$, wobei $\hat{I}_{AC}$ der Spitzenwert des leistungssenderseitigen Resonanzstroms, $\omega_{SW}$ die Schaltfrequenz des ersten und des zweiten Ansteuersignals, $C_{PS}$ die Kapazität des mindestens einen leistungssenderseitigen Kondensators und $\hat{U}_{Cps}$ der Spitzenwert der über dem mindestens einen leistungssenderseitigen Kondensator $C_{PS}$ abfallenden Spannung ist. Erfindungsgemäß wird bevorzugt $\hat{I}_{AC}$ ermittelt, da bei dieser Messung noch keine Nulldurchgänge detektiert und keine Phasenbeziehung bekannt ist. Bekannt ist nur die Amplitude.

Weiterhin bevorzugt hat die Auswertevorrichtung Kenntnis, insbesondere durch Verwendung eines Komparators und eines Timers, über eine Phasenver-

schiebung $\varphi_{U_{Cps}}$ zwischen einer über dem leistungssenderseitigen Resonanzkreis abfallenden Spannung und einer über dem mindestens einen leistungssenderseitigen Kondensator abfallenden Spannung. In diesem Zusammenhang ist die Auswertevorrichtung bevorzugt ausgelegt, eine Phasenverschiebung des leistungssenderseitigen Resonanzstroms zu berechnen nach der Gleichung $\varphi_{i_{AC}} = \varphi_{U_{Cps}} - \dfrac{\pi}{2}$, wobei $\varphi_{i_{AC}}$ die Phasenverschiebung des leistungssenderseitigen Resonanzstroms gegenüber der über dem leistungssenderseitigen Resonanzkreis abfallenden Spannung ist, *und*

$\varphi_{U_{Cps}}$ die Phasenverschiebung der über dem mindestens einen leistungssenderseitigen Kondensator abfallenden Spannung $U_{Cps}$ gegenüber der über dem leistungssenderseitigen Resonanzkreis abfallenden Spannung.

Eine bevorzugte Weiterbildung der erfindungsgemäßen Schaltungsanordnung zeichnet sich dadurch aus, dass die Auswertevorrichtung ausgelegt ist, den über einen der Eingangsanschlüsse zugeführten Gleichstrom zu bestimmen. Besonders bevorzugt ist in diesem Zusammenhang die Auswertevorrichtung ausgelegt, den über den ersten Eingangsanschluss zugeführten Gleichstrom nach folgender Gleichung zu bestimmen:

$$I_{DC} = \frac{\hat{I}_{AC}}{\sqrt{2}} \cdot \cos\left(\varphi_{i_{AC}}\right),$$ wobei $I_{DC}$ der über den ersten

Eingangsanschluss zugeführte Gleichstrom, $\hat{I}_{AC}$ der Spitzenwert des Resonanzstroms durch den leistungssenderseitigen Resonanzkreis und $\varphi_{i_{AC}}$ die Phasenverschiebung des leistungssenderseitigen Resonanzstroms gegenüber der über dem leistungssenderseitigen Resonanzkreis abfallenden Spannung ist. Gemäß dieser Gleichung wird der Wirkstromanteil des Scheinstroms berechnet.

Nach dieser Weiterbildung lässt sich damit ohne die Verwendung eines Messwiderstands sowohl der Eingangsgleichstrom als auch der Resonanzstrom im Wesentlichen durch Auswertung der über dem leistungssenderseitigen Kondensator abfallenden Spannung ermitteln. Es ergibt sich eine Schaltungsanordnung, die sich durch äußerst geringe Verluste auszeichnet und deren leistungssenderseitiger Resonanzkreis eine hohe Güte aufweist.

Die Auswertevorrichtung kann ausgelegt sein, die jeweils benötigten Größen durch Abtastung und digitale Signalverarbeitung zu ermitteln. Hierdurch lassen sich bei besonders geringem Aufwand sehr präzise die benötigten Größen bestimmen. Insbesondere kann in diesem Zusammenhang die Auswertevorrichtung ausgelegt sein, eine vorgebbare Anzahl von Oberwellen zu berücksichtigen. Dadurch wird die Demodulation beziehungsweise die Wirkleistungsmessung noch genauer.

Bei einer bevorzugten Weiterbildung ist die Auswertevorrichtung ausgelegt, eine von der Vorrichtung zur Impedanzmodulation bewirkte Modulation des leistungssenderseitigen Resonanzstroms und/oder der Phase des leistungssenderseitigen Resonanzstroms zu demodulieren. Auf diese Weise werden besonders zuverlässige Demodulationsergebnisse gewonnen.

Die Auswertevorrichtung kann weiterhin mit der Ansteuervorrichtung gekoppelt sein, wobei die Auswertevorrichtung ausgelegt ist, das Ergebnis der Demodulation an die Ansteuervorrichtung zu übertragen, wobei die Ansteuervorrichtung ausgelegt ist, das erste und das zweite Ansteuersignal in Abhängigkeit des Ergebnisses der Demodulation zu variieren. Diese Vorgehensweise trägt dem Umstand Rechnung, dass beispielsweise das von der Leistungsempfängerseite auf die Leistungssenderseite übertragene Signal darin besteht, die Energieübertragung zu stoppen, wieder aufzunehmen oder zu regeln. Entsprechend werden dann der erste und der zweite elektronische Schalter auf der Leistungssenderseite angesteuert.

Weitere bevorzugte Ausführungsformen ergeben sich aus den Unteransprüchen.

Die mit Bezug auf die erfindungsgemäße Schaltungsanordnung vorgestellten bevorzugten Ausführungsformen und deren Vorteile gelten entsprechend, soweit anwendbar, für das erfindungsgemäße Verfahren.

Im Nachfolgenden wird nunmehr Ausführungsbeispiel der vorliegenden Erfindung unter Bezugnahme auf die beigefügten Zeichnungen näher beschrieben. Es zeigen:

Fig. 1    in schematischer Darstellung eine aus dem Stand der Technik bekannte Schaltungsanordnung zur induktiven Energieübertragung mit einem Leistungssender und einem Leistungsempfänger; und

Fig. 2    in schematischer Darstellung eine erfindungsgemäße Schaltungsanordnung zur induktiven Energieübertragung mit einem Leistungssender und einem Leistungsempfänger.

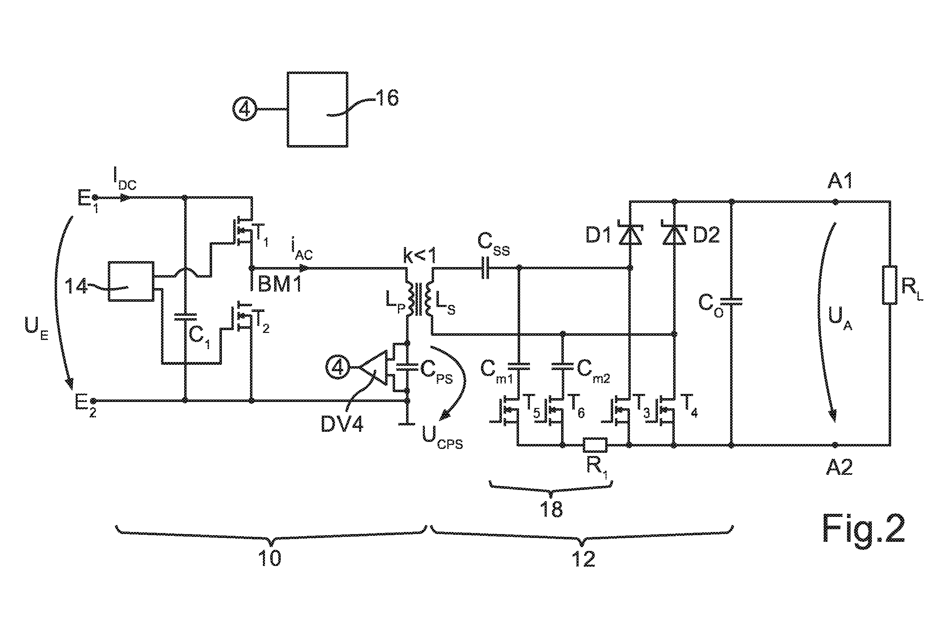

Die mit Bezug auf Fig. 1 eingeführten Bezugszeichen werden, sofern sie gleiche und gleich wirkende Bauelemente betreffen, für das in Fig. 2 dargestellte Ausführungsbeispiel einer erfindungsgemäßen Schaltungsanordnung übernommen. Sie werden der Übersichtlichkeit halber dort nicht nochmals eingeführt.

Fig. 2 zeigt demnach in schematischer Darstellung ein Ausführungsbeispiel einer erfindungsgemäßen Schaltungsanordnung. Zunächst wird der Vollständigkeit halber ergänzend die Vorrichtung 18 zur Impedanzmodulation erklärt, die jedoch nicht Gegenstand der vorliegenden Anmeldung ist. Die Impedanzmodulation ist Stand der Technik und durch den Qi-Standard bekannt.

(System Description - Wireless Power Transmission - Volume I: Low Power - Part 1: Interface Definition - Version 1.0.2 - April 2011 - Seite 6.2 - A.1 .2)

Die Vorrichtung zur Impedanzmodulation weist einen Schalter T5, einen Schalter T6, einen Kondensator Cm1, einen Kondensator Cm2 und einen Widerstand R1 auf. Die Serienschaltung aus dem Schalter T5 und dem Kondensator Cm1 sowie die Serienschaltung aus dem Schalter T6 und dem Kondensator Cm2 haben einen gemeinsamen Knoten, welcher über den Widerstand R1 mit der Systemmasse verbunden ist. Der Serienschaltung aus dem Kondensator Cm1 und dem Schalter T5 ist mit einem ersten Eingang eines Gleichrichters, der die Diode D1, die Diode D2 sowie die Schalter T3 und T4 umfasst, verbunden. Die Serienschaltung aus dem Kondensator Cm2 und dem Schalter T6 ist mit dem zweiten Eingang des Gleichrichters verbunden.

Zur digitalen Impedanzmodulation sind zwei Zustände nötig. In einem ersten Zustand sind die Schalter T5 und T6 in einem nicht leitenden Zustand. Der Eingang des Gleichrichters wird in diesem Zustand nicht durch die Kondensatoren Cm1 und Cm2 belastet. In einem zweiten Zustand sind der Schalter T5 und der Schalter T6 geschlossen, wodurch der Eingang des Gleichrichters, da die Schalter T5 und T6 leitend sind, durch eine Reihenschaltung aus dem Kondensator Cm1 und dem Kondensator Cm2 belastet wird. Diese beiden Zustände verändern die Eingangsimpedanz des Gleichrichters und damit auch den leistungssenderseitigen Eingangsstrom und können demnach einfach zur Signalmodulation genutzt werden.

Zur Ermittlung des Eingangsgleichstroms $I_{DC}$ und des Resonanzstroms $i_{AC}$ wird die über dem Resonanzkondensator $C_{PS}$ abfallende Spannung $U_{Cps}$ gemessen und ausgewertet. Die Spannung $U_{Cps}$ wird insbesondere über einen in der Auswertevorrichtung 16 angeordneten AD-Wandler erfasst. Da die Amplitude dieser Spannung einen hohen Wert hat, ist im Allgemeinen, im Gegensatz zu einer Messung unter Verwendung eines Messwiderstands, keine Verstärkung nötig. Der eingezeichnete Verstärker DV4 ist demnach optional.

Die Spannung $U_{Cps}$ am Resonanzkondensator $C_{PS}$ kann nach der kirchhoffschen Maschengleichung auch aus der Eingangsspannung $U_E$ und der Spannung an der Induktivität $L_P$ errechnet werden. Hierzu ist eine Messung der Spannung über der Induktivität $L_P$ nötig. Diese Vorgehensweise ist besonders dann bevorzugt, wenn statt dem Resonanzkondensator $C_{PS}$ die Induktivität $L_P$ mit dem Bezugspotential verbunden ist.

Die nachfolgenden Ausführungen werden der einfacheren Verständlichkeit halber unter der Annahme vorgenommen, der Resonanzstrom $i_{AC}$ ist sinusförmig. Insbesondere durch die weiter unten noch zu erwähnende Abtastung und digitale Signalverarbeitung lassen sich besonders einfach die nachfolgenden Erkenntnisse und Regeln auf nicht sinusförmige Ströme umsetzen.

Im Ausführungsbeispiel wird die Spitzenspannung $\hat{U}_{Cps}$ am Resonanzkondensator $C_{PS}$ gemessen.

Im allgemeinen Fall weist diese Kondensatorspannung einen Gleichspannungsanteil auf, welcher zur weiteren Verarbeitung subtrahiert werden muss. In den weiteren Berechnungen wird davon ausgegangen, dass dies bereits erfolgt ist. Dieser Gleichspannungsanteil ist bekannt und lässt sich beispielsweise einfach aus der Eingangsspannung und dem Tastverhältnis der Halbbrücke berechnen.

Die Schaltfrequenz der Brückenschaltung und damit die Kreisfrequenz $\omega_{SW}$ der rechteckförmigen, über dem leistungssenderseitigen Resonanzkreis anliegenden Spannung sind senderseitig bekannt. Demnach lässt sich der Spitzenwert $\hat{I}_{AC}$ des Stroms $i_{AC}$ wie folgt berechnen: $\hat{I}_{AC} = \omega_{SW} \cdot C_{PS} \cdot \hat{U}_{Cps}$ wobei $\hat{I}_{AC}$ der Spitzenwert des leistungssenderseitigen Resonanzstroms, $\omega_{SW}$ die Schaltfrequenz des ersten und des zweiten Ansteuersignals, $C_{PS}$ die Kapazität des mindestens einen leistungssenderseitigen Kondensators und $\hat{U}_{Cps}$ der Spitzenwert der über dem mindestens einen leistungssenderseitigen Kondensator $C_{PS}$ abfallenden Spannung ist.

Weiterhin werden messtechnisch die Nulldurchgänge der offsetbefreiten Kondensatorspannung $U_{Cps}$ ermittelt und der zeitliche Versatz dieser im Vergleich zu den bekannten Schaltflanken der über dem leistungssenderseitigen Resonanzkreis anliegenden Spannung gemessen. Im einfachsten Fall geschieht dies durch einen Komparator und einen Timer. Das Ergebnis erhält man $\varphi_{U_{Cps}}$.

An einem näherungsweise idealen Kondensator liegt eine Phasenverschiebung von $\pi/2$ zwischen Strom und Spannung vor. Demnach muss die Phasenverschiebung des gemessenen Nulldurchgangs der Kondensatorspannung $U_{Cps}$ um den Winkel $\pi/2$ korrigiert werden. Es ergibt sich eine Phase des Resonanzstroms $i_{AC}$ zu: zu: $\varphi_{i_{AC}} = \varphi_{U_{Cps}} - \dfrac{\pi}{2}$, wobei $\varphi_{i_{AC}}$ die Phasenverschiebung des leistungssenderseitigen Resonanzstroms gegenüber der über dem leistungssenderseitigen Resonanzkreis abfallenden Spannung und $\varphi_{U_{Cps}}$ die Phasenverschiebung der über dem mindestens einen leistungssenderseitigen Kondensator abfallenden Spannung $U_{Cps}$ gegenüber der über dem leistungssenderseitigen Resonanzkreis abfallenden Spannung ist.

Nach dieser Messung ist sowohl die Phasenbeziehung zwischen der über dem leistungssenderseitigen Resonanzkreis abfallenden Spannung und dem Resonanzstrom $i_{AC}$ als auch der Spitzenwert $\hat{I}_{AC}$ dieses Resonanzstroms bekannt. Die Berechnung des eingangsseitigen Gleichstroms $I_{DC}$ ist demnach möglich nach folgender Gleichung: $I_{DC} = \dfrac{\hat{I}_{AC}}{\sqrt{2}} \cdot \cos\left(\varphi_{i_{AC}}\right)$, wobei $I_{DC}$

der über den ersten Eingangsanschluss zugeführte Gleichstrom, $\hat{I}_{AC}$ der Resonanzstrom durch den leistungssenderseitigen Resonanzkreis und $\varphi_{i_{AC}}$ die Phasenverschiebung des leistungssenderseitigen Resonanzstroms gegenüber der über dem leistungssenderseitigen Resonanzkreis abfallenden Spannung ist.

Damit sind alle für die Demodulation beziehungsweise die Wirkleistungsmessung benötigten Größen auch ohne die Nutzung von Messwiderständen und ohne die Nutzung eines Strommesstransformators bekannt.

Eine Abtastung und digitale Signalverarbeitung ermöglicht auf dieser Grundlage auch eine zusätzliche Berücksichtigung einer beliebigen Anzahl von Oberwellen, das heißt eines nicht sinusförmigen Stroms. Der Vorteil dieser Vorgehensweise liegt darin, dass auch Oberwellen einen Wirkanteil verursachen, im Wesentlichen die ungeradzahligen Vielfachen. Die digitale Signalverarbeitung basiert insbesondere auf der Fourier-Analyse. Des Weiteren kann im Fall der digitalen Signalverarbeitung auf die direkte Messung der Spitzenspannung und der Phasenverschiebung verzichtet werden. Dies hat seine Ursache darin, dass Betrag und Phase durch eine digitale Abtastung der Kondensatorspannung errechnet werden können. Sind diese beiden Größen bekannt, folgt das beschriebene erfindungsgemäße Verfahren.

Zur Demodulation impedanzmodulierter Informationen können sowohl der Betrag des Resonanzstroms $\hat{I}_{AC}$ als auch die Phase $\varphi_{i_{AC}}$ des Resonanzstroms $i_{AC}$ herangezogen werden. Eine Demodulation beider Größen ist besonders vorteilhaft. Die Demodulation an sich ist aus dem Stand der Technik bekannt und nicht Gegenstand der vorliegenden Anmeldung.

**Patentansprüche**

1. Schaltungsanordnung zur induktiven Energieübertragung mit einem Leistungssender (10) und einem Leistungsempfänger (12), wobei der Leistungssender (10) umfasst:

- einen Eingang mit einem ersten (E1) und einem zweiten Eingangsanschluss (E2);
- eine Brückenschaltung mit mindestens einem ersten ($T_1$) und einem zweiten elektronischen Schalter ($T_2$), die seriell zwischen den ersten (E1) und den zweiten Eingangsanschluss (E2) gekoppelt sind, wobei zwischen dem ersten ($T_1$) und dem zweiten elektronischen Schalter ($T_2$) ein erster Brückenmittelpunkt (BM1) gebildet ist;
- eine Ansteuervorrichtung (14) zum Ansteuern des ersten ($T_1$) und des zweiten elektronischen Schalters ($T_2$) mit jeweils einem Ansteuersignal (AS1; AS2), wobei jedes Ansteuersignal (AS1,

AS2) eine Schaltfrequenz ($\omega_{SW}$) aufweist;
- einen leistungssenderseitigen Resonanzkreis, der mindestens einen leistungssenderseitigen Kondensator ($C_{PS}$) und mindestens eine weitere leistungssenderseitige Impedanz ($L_P$) umfasst, die zueinander in Serie geschaltet sind, wobei der Resonanzkreis zwischen den ersten Brückenmittelpunkt (BM1) und einen der beiden Eingangsanschlüsse (E1; E2) gekoppelt ist; und
- eine Auswertevorrichtung (16) zur Bestimmung und Auswertung eines leistungssenderseitigen Resonanzstroms durch den leistungssenderseitigen Resonanzkreis;

wobei der Leistungsempfänger (12) umfasst:

- mindestens eine leistungsempfängerseitige Spule ($L_S$), die mit der mindestens einen leistungssenderseitigen Impedanz ($L_P$) induktiv gekoppelt ist;
- eine Vorrichtung (18) zur Impedanzmodulation, die mit der leistungsempfängerseitigen Spule ($L_S$) gekoppelt ist; und
- einen Ausgang mit einem ersten (A1) und einem zweiten Ausgangsanschluss (A2) zum Bereitstellen einer Leistung an einen Verbraucher ($R_L$);

**dadurch gekennzeichnet,**
**dass** die Auswertevorrichtung (16) mit mindestens einem Element ($C_{PS}$, $L_P$) des leistungssenderseitigen Resonanzkreises, insbesondere dem leistungssenderseitigen Kondensator ($C_{PS}$), gekoppelt ist.

2. Schaltungsanordnung nach Anspruch 1,
**dadurch gekennzeichnet,**
**dass** die Auswertevorrichtung (16) ausgelegt ist, eine Spannung ($U_{Cps}$), die mit der über dem mindestens einen leistungssenderseitigen Kondensator ($C_{PS}$) zumindest in vorgebbaren Zeiträumen abfallenden Spannung korreliert ist, zu bestimmen und auszuwerten.

3. Schaltungsanordnung nach einem der Ansprüche 1 oder 2,
**dadurch gekennzeichnet,**
**dass** zwischen die Auswertevorrichtung (16) und den mindestens einen leistungssenderseitigen Kondensator ($C_{PS}$) ein Verstärker (DV4), insbesondere ein Differenzverstärker, gekoppelt ist.

4. Schaltungsanordnung nach einem der vorhergehenden Ansprüche,
**dadurch gekennzeichnet,**
**dass** die Auswertevorrichtung (16) Kenntnis hat, insbesondere durch Auswertung eines der Ansteuersignale (AS1; AS2) und/oder durch Auslesen aus einer Speichervorrichtung, über die Schaltfrequenz ($\omega_{SW}$)

des ersten (AS1) und des zweiten Ansteuersignals (AS2).

5. Schaltungsanordnung nach einem der vorhergehenden Ansprüche,
**dadurch gekennzeichnet,**
**dass** die Auswertevorrichtung (16) Kenntnis hat, insbesondere durch Auslesen aus einer Speichervorrichtung, über die Kapazität des mindestens einen leistungssenderseitigen Kondensators ($C_{PS}$).

6. Schaltungsanordnung nach einem der vorhergehenden Ansprüche,
**dadurch gekennzeichnet,**
**dass** die Auswertevorrichtung (16) ausgelegt ist, den leistungssenderseitigen Resonanzstrom zu berechnen nach folgender Gleichung:

$$\hat{I}_{AC} = \omega_{SW} \cdot C_{PS} \cdot \hat{U}_{Cps}$$

wobei $\hat{I}_{AC}$ der Spitzenwert des leistungssenderseitigen Resonanzstroms, $\omega_{SW}$ die Schaltfrequenz des ersten (AS1) und des zweiten Ansteuersignals (AS2),
$CP_S$ die Kapazität des mindestens einen leistungssenderseitigen Kondensators ($C_{PS}$), und
$\hat{U}_{Cps}$ der Spitzenwert der über dem mindestens einen leistungssenderseitigen Kondensator ($C_{PS}$) abfallenden Spannung ist.

7. Schaltungsanordnung nach einem der vorhergehenden Ansprüche,
**dadurch gekennzeichnet,**
**dass** die Auswertevorrichtung (16) Kenntnis hat, insbesondere durch Verwendung eines Komparators und eines Timers, über eine Phasenverschiebung
$\varphi_{U_{Cps}}$ zwischen einer über dem leistungssenderseitigen Resonanzkreis abfallenden Spannung und einer über dem mindestens einen leistungssenderseitigen Kondensator ($C_{PS}$) abfallenden Spannung.

8. Schaltungsanordnung nach Anspruch 7,
**dadurch gekennzeichnet,**
**dass** die Auswertevorrichtung (16) ausgelegt ist, eine Phasenverschiebung des leistungssenderseitigen Resonanzstroms zu berechnen nach der Gleichung:

$$\varphi_{i_{AC}} = \varphi_{U_{Cps}} - \frac{\pi}{2}$$

wobei $\varphi_{i_{AC}}$ die Phasenverschiebung des leistungssenderseitigen Resonanzstroms gegenüber der über dem leistungssenderseitigen Resonanzkreis abfallenden Spannung, und $\varphi_{U_{Cps}}$ die Phasenverschiebung der über dem mindestens einen leistungssenderseitigen Kondensator ($C_{PS}$) abfallenden Spannung ($U_{Cps}$) gegenüber der über dem leistungssenderseitigen Resonanzkreis abfallenden Spannung ist.

9. Schaltungsanordnung nach einem der vorhergehenden Ansprüche,
**dadurch gekennzeichnet,**
**dass** die Auswertevorrichtung (16) ausgelegt ist den über einen der Eingangsanschlüsse (E1; E2) zugeführten Gleichstrom zu bestimmen.

10. Schaltungsanordnung nach Anspruch 9,
**dadurch gekennzeichnet,**
**dass** die Auswertevorrichtung (16) ausgelegt ist, den über den ersten Eingangsanschluss (E1) zugeführten Gleichstrom nach folgender Gleichung zu bestimmen:

$$I_{DC} = \frac{\hat{I}_{AC}}{\sqrt{2}} \cdot \cos\left(\varphi_{i_{AC}}\right)$$

wobei $I_{DC}$ der über den ersten Eingangsanschluss (E1) zugeführte Gleichstrom, $\hat{I}_{AC}$ der Spitzenwert des Resonanzstroms durch den leistungssenderseitigen Resonanzkreis; und $\varphi_{i_{AC}}$ die Phasenverschiebung des leistungssenderseitigen Resonanzstroms gegenüber der über dem leistungssenderseitigen Resonanzkreis abfallenden Spannung ist.

11. Schaltungsanordnung nach einem der vorhergehenden Ansprüche,
**dadurch gekennzeichnet,**
**dass** die Auswertevorrichtung (16) ausgelegt ist, die jeweils benötigten Größen durch Abtastung und digitale Signalverarbeitung zu ermitteln.

12. Schaltungsanordnung nach Anspruch 11,
**dadurch gekennzeichnet,**
**dass** die Auswertevorrichtung (16) ausgelegt ist, eine vorgebbare Anzahl von Oberwellen zu berücksichtigen.

13. Schaltungsanordnung nach einem der vorhergehenden Ansprüche,
**dadurch gekennzeichnet,**

**dass** die Auswertevorrichtung (16) ausgelegt ist, eine von der Vorrichtung (18) zur Impedanzmodulation bewirkte Modulation des leistungssenderseitigen Resonanzstroms und/oder der Phase ($\omega_{AC}$) des leistungssenderseitigen Resonanzstroms zu demodulieren.

14.  Schaltungsanordnung nach Anspruch 13,
    **dadurch gekennzeichnet,**
    **dass** die Auswertevorrichtung (16) mit der Ansteuervorrichtung (14) gekoppelt ist, wobei die Auswertevorrichtung (16) ausgelegt ist, das Ergebnis der Demodulation an die Ansteuervorrichtung (14) zu übertragen, wobei die Ansteuervorrichtung (14) ausgelegt ist, das erste (AS1) und das zweite Ansteuersignal (AS2) in Abhängigkeit des Ergebnisses der Demodulation zu variieren.

15.  Verfahren zur induktiven Energieübertragung unter Verwendung einer Schaltungsanordnung mit einem Leistungssender (10) und einem Leistungsempfänger (12),
    wobei der Leistungssender (10) umfasst: einen Eingang mit einem ersten (E1) und einem zweiten Eingangsanschluss (E2); eine Brückenschaltung mit mindestens einem ersten ($T_1$) und einem zweiten elektronischen Schalter ($T_2$), die seriell zwischen den ersten (E1) und den zweiten Eingangsanschluss (E2) gekoppelt sind, wobei zwischen dem ersten ($T_1$) und dem zweiten elektronischen Schalter ($T_2$) ein erster Brückenmittelpunkt (BM1) gebildet ist; eine Ansteuervorrichtung (14) zum Ansteuern des ersten ($T_1$) und des zweiten elektronischen Schalters ($T_2$) mit jeweils einem Ansteuersignal (AS1; AS2), wobei jedes Ansteuersignal (AS1, AS2) eine Schaltfrequenz ($\omega_{SW}$) aufweist; einem leistungssenderseitigen Resonanzkreis, der mindestens einen leistungssenderseitigen Kondensator ($C_{PS}$) und mindestens eine weitere leistungssenderseitige Impedanz ($L_P$) umfasst, die zueinander in Serie geschaltet sind, wobei der Resonanzkreis zwischen den ersten Brückenmittelpunkt (BM1) und einen der beiden Eingangsanschlüsse (E1; E2) gekoppelt ist; und eine Auswertevorrichtung (16) zur Bestimmung und Auswertung eines leistungssenderseitigen Resonanzstroms durch den leistungssenderseitigen Resonanzkreis;
    wobei der Leistungsempfänger (12) umfasst: mindestens eine leistungsempfängerseitige Spule ($L_S$), die mit der mindestens einen leistungssenderseitigen Impedanz ($L_P$) induktiv gekoppelt ist; eine Vorrichtung (18) zur Impedanzmodulation, die mit dem leistungsempfängerseitigen Spule ($L_S$) gekoppelt ist; und einen Ausgang mit einem ersten (A1) und einem zweiten Ausgangsanschluss (A2) zum Bereitstellen einer Leistung an einen Verbraucher ($R_L$);
    **gekennzeichnet durch** folgenden Schritt:

Bestimmen des leistungssenderseitigen Resonanzstroms unter Verwendung der über mindestens einem Element ($C_{PS}$, $L_P$) des leistungssenderseitigen Resonanzkreises, insbesondere über dem mindestens einen leistungssenderseitigen Kondensator ($C_{PS}$), zumindest in vorgebbaren Zeiträumen abfallenden Spannung.

Fig.1 (SdT)

EP 2 566 005 A1

Fig.2

Europäisches Patentamt
European Patent Office
Office européen des brevets

**EUROPÄISCHER RECHERCHENBERICHT**

Nummer der Anmeldung

EP 11 18 0060

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2009/081115 A1 (AMWAY EUROP LTD [GB]; DIBBEN JONATHAN RICHARD [GB]; LEMMENS WILLY HENR) 2. Juli 2009 (2009-07-02) | 1,3,9,10 | INV. H02J5/00 |
| Y | * Seite 26, Zeile 18 - Zeile 34; Abbildungen 4,6,14,15 * <br> * Seite 27, Zeile 13 - Zeile 18 * <br> * Seite 27, Zeile 30 - Seite 28, Zeile 2 * <br> * Seite 29, Zeile 8 - Zeile 10 * <br> * Seite 39, Zeile 4 - Zeile 7 * <br> * Seite 39, Zeile 30 - Zeile 32 * <br> ----- | 11-14 | |
| X | US 2006/239043 A1 (OHBO NOBORU [JP]) 26. Oktober 2006 (2006-10-26) | 1,2, 4-10,15 | |
| Y | * Absatz [0001] - Absatz [0002]; Abbildung 1 * <br> * Absatz [0036] - Absatz [0041] * <br> * Absatz [0063] - Absatz [0068] * <br> ----- | 11-14 | |
| A | US 6 301 128 B1 (JANG YUNGTAEK [US] ET AL) 9. Oktober 2001 (2001-10-09) <br> * Satz 32 - Satz 40; Abbildung 8 * <br> ----- | 3 | |
| Y,D | TEXAS INSTRUMENTS: "Qi Compliant Wireless Power Transmitter Manager", 20110601, 1. Juni 2011 (2011-06-01), Seiten 1-23, XP007920192, | 12,14 | RECHERCHIERTE SACHGEBIETE (IPC) <br> H02J <br> H01F <br> B60L <br> H02M |
| A | * Seite 9 - Seite 10; Abbildung 4 * <br> ----- | 1-10,15 | |
| A,D | TEXAS INSTRUMENTS: "bqTESLA Wireless Power Transmitter Manager EVM", 20110601, 1. Juni 2011 (2011-06-01), Seiten 1-18, XP007920193, <br> * das ganze Dokument * <br> ----- | 1-15 | |

Der vorliegende Recherchenbericht wurde für alle Patentansprüche erstellt

| Recherchenort | Abschlußdatum der Recherche | Prüfer |
|---|---|---|
| München | 8. Februar 2012 | Gospodinova, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................
& : Mitglied der gleichen Patentfamilie, übereinstimmendes Dokument

EPO FORM 1503 03.82 (P04C03)

EP 2 566 005 A1

**ANHANG ZUM EUROPÄISCHEN RECHERCHENBERICHT**
**ÜBER DIE EUROPÄISCHE PATENTANMELDUNG NR.**          EP 11 18 0060

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-02-2012

| Im Recherchenbericht angeführtes Patentdokument | Datum der Veröffentlichung | Mitglied(er) der Patentfamilie | Datum der Veröffentlichung |
|---|---|---|---|
| WO 2009081115 A1 | 02-07-2009 | AU 2008339681 A1 | 02-07-2009 |
| | | AU 2008339692 A1 | 02-07-2009 |
| | | CA 2709860 A1 | 02-07-2009 |
| | | CA 2709867 A1 | 02-07-2009 |
| | | CN 101978571 A | 16-02-2011 |
| | | CN 101981780 A | 23-02-2011 |
| | | EP 2232668 A1 | 29-09-2010 |
| | | EP 2238666 A1 | 13-10-2010 |
| | | JP 2011507481 A | 03-03-2011 |
| | | JP 2011507482 A | 03-03-2011 |
| | | KR 20100094596 A | 26-08-2010 |
| | | KR 20100098715 A | 08-09-2010 |
| | | TW 201001866 A | 01-01-2010 |
| | | TW 201001867 A | 01-01-2010 |
| | | US 2011285210 A1 | 24-11-2011 |
| | | US 2011291491 A1 | 01-12-2011 |
| | | WO 2009081115 A1 | 02-07-2009 |
| | | WO 2009081126 A1 | 02-07-2009 |
| US 2006239043 A1 | 26-10-2006 | KEINE | |
| US 6301128 B1 | 09-10-2001 | KEINE | |

Für nähere Einzelheiten zu diesem Anhang : siehe Amtsblatt des Europäischen Patentamts, Nr.12/82

EPO FORM P0461